(19) **Europäisches Patentamt**

**European Patent Office**

**Office européen des brevets**

(11) **EP 1 448 002 A1**

(12) **EUROPEAN PATENT APPLICATION**

(43) Date of publication:
**18.08.2004 Bulletin 2004/34**

(51) Int Cl.⁷: **H04Q 7/30**

(21) Application number: **03290366.8**

(22) Date of filing: **14.02.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO**<br><br>(71) Applicant: **EVOLIUM S.A.S.**<br>**75008 Paris (FR)** | (72) Inventor: **Lange, Keld, Dr.**<br>**75443 Ötisheim (DE)**<br><br>(74) Representative: **Brose, Gerhard, Dipl.-Ing. et al**<br>**Alcatel**<br>**Intellectual Property Department, Stuttgart**<br>**70430 Stuttgart (DE)** |

(54) **A component and a network element**

(57) The present invention relates to a network element of a telecommunication network comprising a first component (COMP_1) and a second component (COMP_2) and an interface between said first component (COMP_1) and said second component (COMP_2), the first component (COMP_1) comprising a set of units of a first kind (U_1) performing a first functionality, the second component (COMP_2) comprising multiple stages (S_1, ..., S_4) of at least one unit of a second kind (U_2) performing a second functionality, the set of units of a first kind (U_1) is connected with the first stage (S_1) of the second component, the units of a second kind (U_2) are multistage-connected, such that each unit is connected with at least one other unit in a preceding stage, the units of a second kind (U_2) further comprising routing means for restructuring and passing said complex data streams through said stages, and the units of a second kind (U_2) comprising add means and drop means for aggregating and extracting a sub data stream to/from said complex data streams, where the units of a second kind (U_2) further comprising accessing and processing means for accessing and processing said sub data stream, thereby performing said second functionality. The invention further relates to a network element component.

Fig. 10

EP 1 448 002 A1

**Description**

The present invention relates to a network element of a telecommunication network and a component of said network element.

Such network element might be the add/drop multiplexer comprising passive optical components for wavelength division multiplexing, described in the US Patent No. 6,061,484.

The evolution of communication networks, such as mobile communication networks shows increasing demands. This is illustrated by considering the evolution to Universal Mobile Telecommunications System (UMTS) envisioned as the successor to Global System for Mobile Communications (GSM). UMTS addresses the growing demand of mobile and Internet applications for new capacity.

One of changes is the new UMTS terrestrial radio access (UTRA), a wide-band code division multiple access (W-CDMA) radio interface for land-based communications. UTRA supports time division duplex (TDD) and frequency division duplex (FDD). A radio access network UMTS terrestrial radio access network (UTRAN) is connected via the 'lu' interface to a core network (CN).

Two network elements are introduced in UTRAN, RNC, and node B. UTRAN is subdivided into individual radio network systems (RNSs), where each RNS is controlled by an RNC. The RNC is connected to a set of node B elements, each of which can serve one or several cells.

UMTS defines a bunch of new open interfaces, e.g. Uu: User equipment (UE) to node B (UTRA, the UMTS W-CDMA air interface), lu: RNC to GSM Phase 2+ CN interface, lub: RNC to node B interface, lur: RNC to RNC interface. The lu, lub, and lur interfaces are based on ATM transmission principles.

Abstracting from the above example teaches that a network element is a 'interface-transformer'. A node B, for instance, is the physical unit for radio transmission/reception with cells. Node B collects with the UE via the W-CDMA Uu radio interface and with the RNC via the lub asynchronous transfer mode (ATM)-based interface. The main task of node B is the conversion of data to and from the Uu radio interface, including forward error correction (FEC), rate adaptation, W-CDMA spreading/de-spreading, and quadrature phase shift keying (QPSK) modulation on the air interface. It measures quality and strength of the connection and determines the frame error rate (FER), transmitting these data to the RNC as a measurement report for handover and macro diversity combining. The node B is also responsible for the FDD softer handover. Hence, the 'interface-transformer'-abstraction might not reflect all detailed node B functionalities, or in general network element functionalities. But the 'interface-transformer'-abstraction enables to identify a design pattern for network element components.

Considering a second example network element, an network access server, a computer server that enables an Internet service provider (ISP) to provide connected customers with Internet access. A network access server has interfaces to both the local telecommunication service provider such as the phone company and to an Internet backbone. The server authenticates users requesting login. It receives a dial-up call from each user host, such as a computer, that wants to access the Internet, performs the necessary steps to authenticate and authorize each user, usually by verifying a user name and password, and then allows requests to begin to flow between the user host and hosts elsewhere on the Internet. The term network access server may refer to a server devoted entirely to managing network access or to a server that also performs other functions as well. A network access server can be configured to provide a host of services such as VoIP, fax-over-IP, and voicemail-over-IP as well.

A digital subscriber line access multiplexer (DSLAM) is a network element delivering exceptionally high-speed data transmission over existing copper telephone lines. A DSLAM separates the voice-frequency signals from the high-speed data traffic and controls and routes digital subscriber line (xDSL) traffic between the subscriber's end-user equipment (router, modem, or network interface card) and the network service provider's network.

These network elements share a common topological problem: multiple data streams are to be concentrated or de-concentrated, processed, and passed over an interface boundary.

A channel is a separate path through which signals can flow. A signal is an electric current or electromagnetic field used to convey data from one place to another. Complex signals contains one or more data streams. Data is superimposed on a carrier e.g. by means of modulation. In general, to aggregate (verb, from Latin aggregare meaning to add to) is to collect things together. An aggregate (adjective) thing is a collection of other things. An aggregation is a collection. A data stream is a sequence of data that are transmitted from one place to another. A complex data stream is an aggregation of multiple data streams. The word "index" has a very large number of completely different meanings. Here it means an identifier used to designate one out of a number of possible things which is associated with this identifier. A decomposable complex data stream is a data stream where each aggregated data stream has an index and can be separated using the its index.

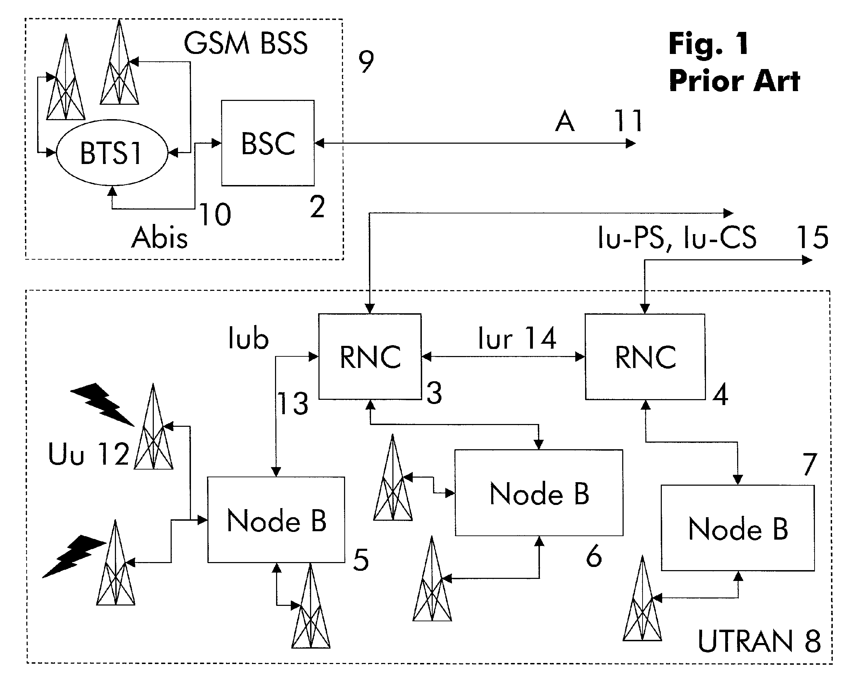

The evolution of telecommunication networks illustrates that the communication networks and correspondingly the involved network elements are faced with increasing demands for capacity and interaction, e.g. shown in figure 1 in the case of UMTS. System/network element interfaces are specified to fulfil certain performance requirements. In addition, it is necessary to extract sub data streams from data streams passing these interfaces. Components of a network element interchanging such data streams are faced to these requirements, too. To cope with these requirements it is necessary to derive an architectural design in order to implement compliant and performant network elements, i.e. performant component interfaces.

The invention faces the problem of an improved design for network elements of a telecommunication network and components of said network element handling with decomposable complex data streams.

The problem is solved by a network element of a telecommunication network comprising a first component and a second component and an interface between said first component and said second component, the first component comprising a set of units of a first kind performing a first functionality, the second component comprising multiple stages of at least one unit of a second kind performing a second functionality, the set of units of a first kind is connected with the first stage of the second component, the units of a second kind are multistage-connected, such that each unit is connected with at least one other unit in a preceding stage, the units of a second kind further comprising routing means for restructuring and passing said complex data streams through said stages, and the units of a second kind comprising add means and drop means for aggregating and extracting a sub data stream to/from said complex data streams, such that the units of a second kind comprising further accessing and processing means for accessing and processing said sub data stream, thereby performing said second functionality. The units of a second kind might be interconnected within the stage. All stages might have the same number of units, except the last stage. And the stages might be interconnected by a complete mesh. The network element might further comprising detection means for detecting defect units, such that the routing means having control means supporting fault tolerance by avoiding rout paths over said defect units. The network element might be a node B, and the means for aggregating and extracting at least one data stream is realized by means of code division multiple access, the first component is a radio transmitter, and the second component is a baseband module.

The problem is further solved by a component within a network element of a telecommunication network, the component comprising multiple stages of at least one unit performing a functionality, the first stage providing a component interface, the units are multistage-connected, such that each unit is connected with at least one other unit in a preceding stage, and the units comprising routing means for restructuring and passing said complex data streams through said stages, and the units comprising add means and drop means for aggregating and extracting sub data streams from said complex data streams, such that the unit further comprising accessing and processing means for accessing and processing said at least one data stream, thereby performing the functionality. All stages might have the same number units, except the last stage. The stages might be interconnected by a complete mesh.

As an illustrative application, considering an internal node B component interface. The main functionality of a node B is to perform the air interface processing, i.e. channel coding and interleaving, rate adaptation, spreading, etc. Major components are a radio transmitter module responsible for receiving and transmitting the radio signal, i.e. generating (power amplifier) and receiving (receiver) by modulating (filter) and demodulating (filter) carriers. A second component could be a baseband module, encoding and decoding, multiplexing and de-multiplexing the CDMA signal. Obviously the interface between these two components has to cope with the performance requirements of a node B.

In the following exemplary a W-CDMA node B system is designed, in principle, in order to illustrate the application of the invention, resulting in an even scalable interface configuration interconnecting a baseband module consisting of baseband processors and radio transmitter modules.

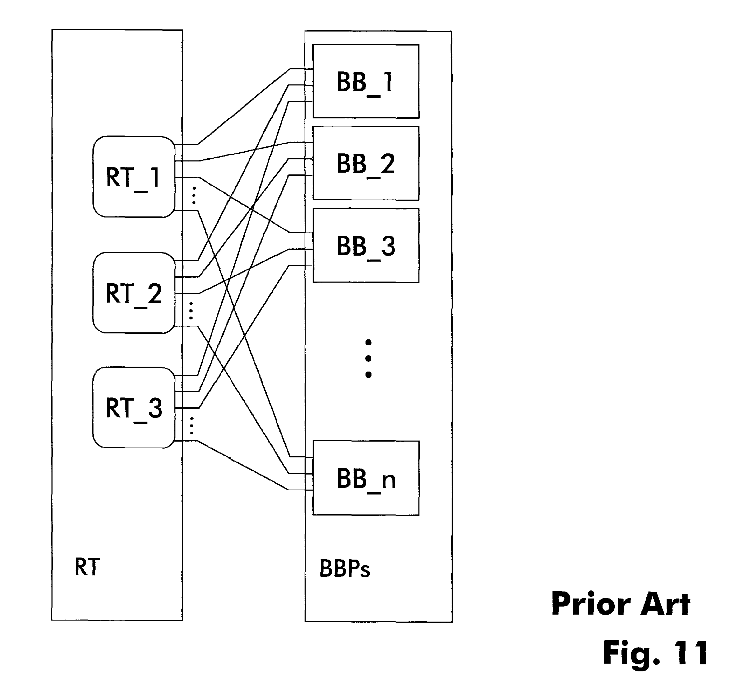

Full interface matrix configuration, as shown in figure 11, is generally used, allowing multiple baseband processors to connect to one radio transmitter. However its implementation has certain disadvantages, e.g. the critical line length matching.

The component (interface) could for instance consist of three stages where a stage holding three baseband modules. The first stage is interfacing to the radio transmitter modules. Each cluster is interconnected to the next cluster by a complete mesh. A mesh is an arbitrary set of connections between two set of elements. A complete mesh is a mesh where each element of the a set of elements is connected to each element of the other set. In addition to these interfaces, each baseband modules in the first cluster has a cluster internal interface and an inter-cluster interface. Baseband processors in the following clusters need only inter-cluster interfaces. The radio transmitter is able to select among three inter-connections to contact the first cluster. Comparing this to prior art, shown in figure 11, instead of aggregation and indexing in full-matrix configuration the functionality is distributed over the baseband modules.

Accordingly, it is an object and advantage of the present invention to provide efficient network element component interfaces smoothly reducing the throughput on inter-connections by load/capacity balancing. This yields e.g. to simplification of implementation and compact design. The uniform design allows efficient synchronized forwarding and minimum circuit sizes.

Another advantage of the present invention is that the invention enables the (re-)assignment or (re-)allocation of sub-data streams to dedicated clusters.

A further advantage of the present invention is that the number of interconnection interfaces between components, i.e. the fan in and the fan out, does not depend on the number of involved components.

Yet another advantage of the present invention is the enhanced flexibility and scalability of a component interface.

These and many other objects and advantages of the present invention will become apparent to those of ordinary skill in the art from a consideration of the drawings and ensuing description.

**Figure. 1** is a schematic drawing of a part of a prior art UMTS network architecture.

**Figure. 2** is a schematic drawing of external and internal interfaces of a node B network element according to the invention.

**Figure. 3** is a schematic drawing of multiple access schemas according to prior art.

**Figure. 4** is a schematic drawing of an aggregation and separation operation for complex data streams applied within a component according to the invention.

**Figure. 5** is a schematic drawing of an aggregation and separation operation for decomposable complex data streams applied within a component interface according to the invention.

**Figure. 6** is a schematic drawing of a cascaded aggregation operation for decomposable complex data streams applied within a component according to the invention.

**Figure. 7** is a schematic drawing of an aggregation and separation operation for multiple decomposable complex data streams applied within a component according to the invention.

**Figure. 8** is a schematic drawing of a cascaded aggregation operation for multiple decomposable complex data streams applied within a component according to the invention.

**Figure. 9** is a schematic drawing of a cascaded aggregation and separation unit applied within a component according to the invention.

**Figure. 10** is a schematic drawing of a component interface in a network element according to the invention.

**Figure. 11** is a schematic drawing of a radio transmitter to baseband processor interface in a node B according to prior art.

**Figure. 12** is a schematic drawing of a radio transmitter to baseband processor interface in a node B network element according to the invention.

**Figure. 1** shows a GSM base station subsystem GSM BSS 9, comprising antennas connected to a BTS 1. The BTS 1 is connected to a BSC 2 over a Abis interface 10, The BSC 2 is interconnected with the further network infra structure via an A interface 11. The figure further shows a UTRAN 8, comprising node B and RNC network elements, namely node B 5, 6, 7, with associated antennas, and RNCs 3 and 4. The RNC 3 is connected via the lub interface 13 to node B 5 and 6. The RNC 4 is interconnected with node B 7 over lub. The RNCs 3 and 4 are interconnected via lur interface 14, and the RNCs are further connected to further network infra structure via interfaces lu-Ps, lu-CS 15. A radio interface Uu 12 to the user equipment is also shown. The figure illustrates the interface requirement to a network element in the UMTS context.

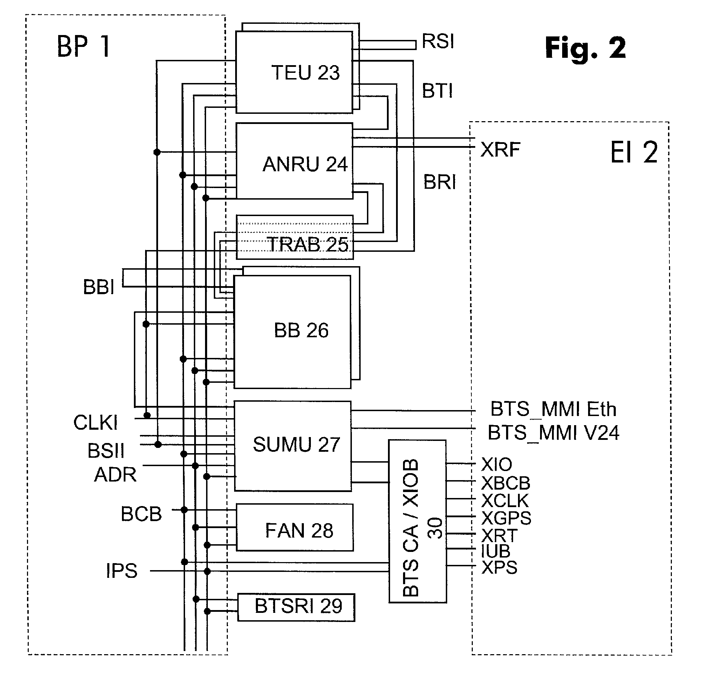

**Figure. 2** illustrates the complex external and internal interfaces of an example network element realization, a node B. A bunch of internal interfaces is realized by a back plane BP 1. The external interfaces are emphasized by a dashed box EI 2. The node B comprises the following components: a connection area BTS CA / XIOB 30, a FAN 28, a BTSRI 27, a station unit module universal (SUMU) 27, baseband boards (BB) 26, a transition adapter board (TRAB) 25, an antenna receiver unit (ANRU) 24, and transmitter equipment for UMTS (TEU) 23. The external interfaces EI 2 comprising, e.g. a radio frequency interface XRF, the BTS man machine interface, and a bunch of other interfaces. The back plane BP 1 comprises a base station control bus BCB, an internal global positioning system (GPS) interface IPS, a physical internal addressing bus ADR, a base station internal interface BSII, an internal data clock CLKI, and baseband board to baseband board interfaces BBI. Interfaces between TEU 23, ANRU 24, and BBs 26 over TRAB 25 comprising a radio synchronization interface RSI, baseband transmitter interface BTI, and a baseband receiver interface BRI.

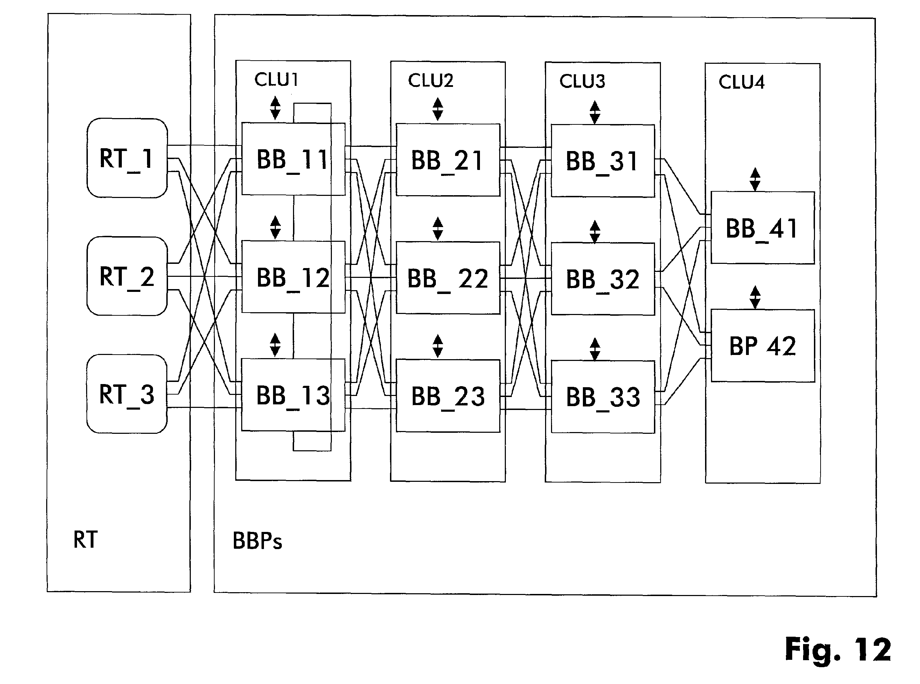

Technically, the digital internal interfaces of this node B are based on synchronous serial buses. The clocks and frame signals are distributed via busses to and from the BB modules and as point-to-point connections to TEU and ANRU modules. The component interface according to the invention is realized within this node B between the baseband boards BB 26 and a radio transmission reception section TEU 23 and a radio receiving section ANRU 24. The structure of this interface will be described in detail using figure 12.

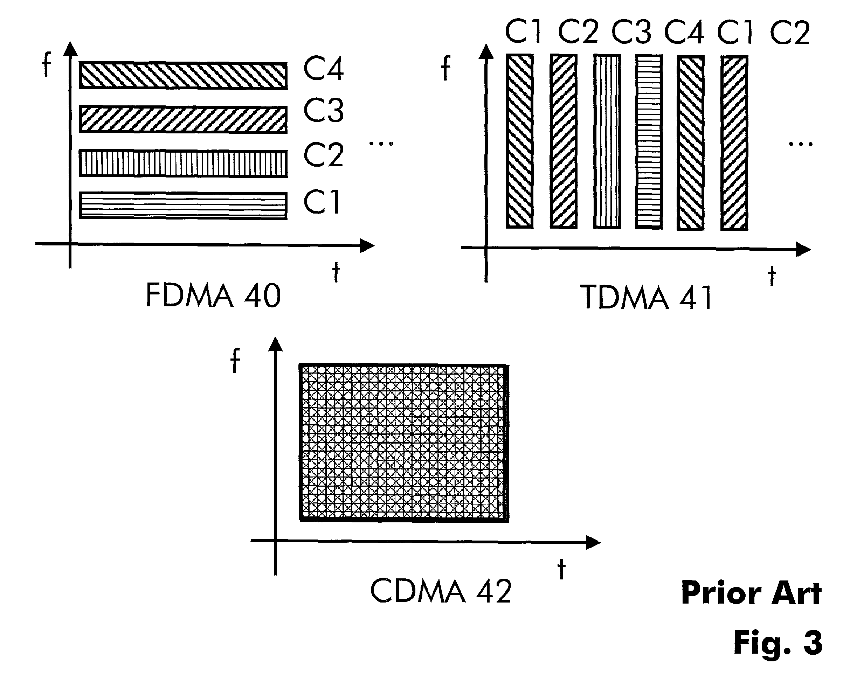

**Figure. 3** is a schematic drawing of multiple access schemas showing how multiple channels C1, ..., C4 are mapped onto the radio resources frequency f and time t. In frequency division multiple access FDMA 40 separate frequency intervals are used to identify channels. Time division multiple access TDMA 41 separates the channels using time slicing. And code division multiple access CDMA 42 uses codes to identify shared time and frequency resources for indexing the channels. Thus all three multiple access methods provide technology counterexamples for decomposable complex data streams, i.e. indexing of data streams.

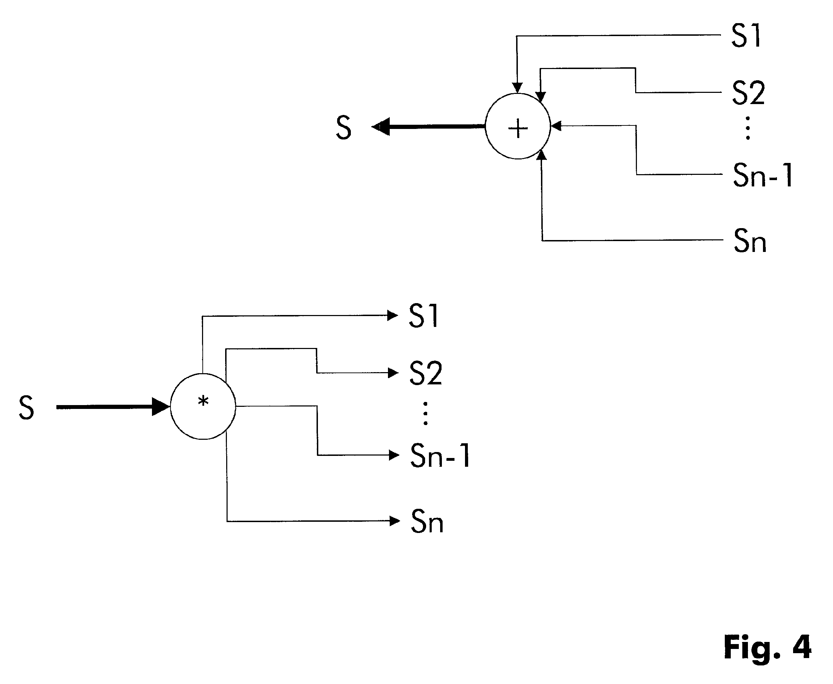

**Figure. 4** shows the concept of an aggregation operation + and a separation operation * for single data streams S1, S2, ... Sn-1, Sn to a complex data stream S and vice versa. The multiple access methods FDMA, TDMA, and CDMA for instance define explicitly such aggregation operation + and their inverse separation operation *. The connection between both associated functions is

$$S = \text{aggregate}((S1,1), (S2,2), ..., (Sn, n));$$

$$\text{separate}(S, i1, i2, ..., n) = [(S1,1), (S2,2), ..., (Sn, n)]$$

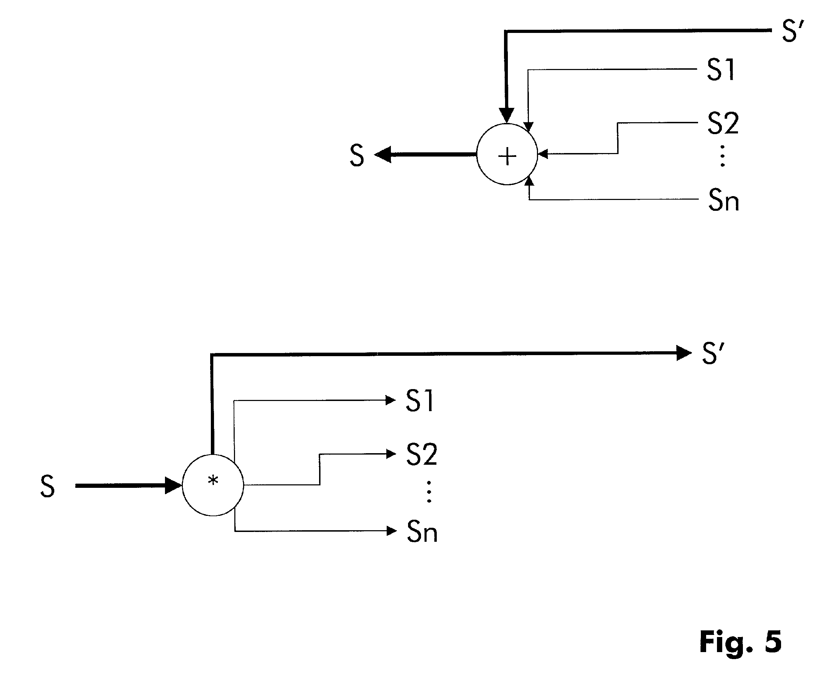

**Figure. 5** shows an advanced concept of an aggregation + and an separation operation * for decomposable complex data streams S, S' that might e.g. be based on the aggregation and separation of single data streams, inductively. A first complex data streams S' and single data streams S1, S2, ..., Sn are aggregated into a resulting complex data stream S. Conversely, a complex data stream S is separated into a first complex data stream S' and single data streams S1, S2, ..., Sn. The connection between both associated functions is

$$S = \text{Aggregate}(S', (S1,1), (S2,2), ..., (Sn, n));$$

$$\text{Separate}(S, (i1, i2, ..., n)) = [S', (S1,1), (S2,2), ..., (Sn, n)]$$

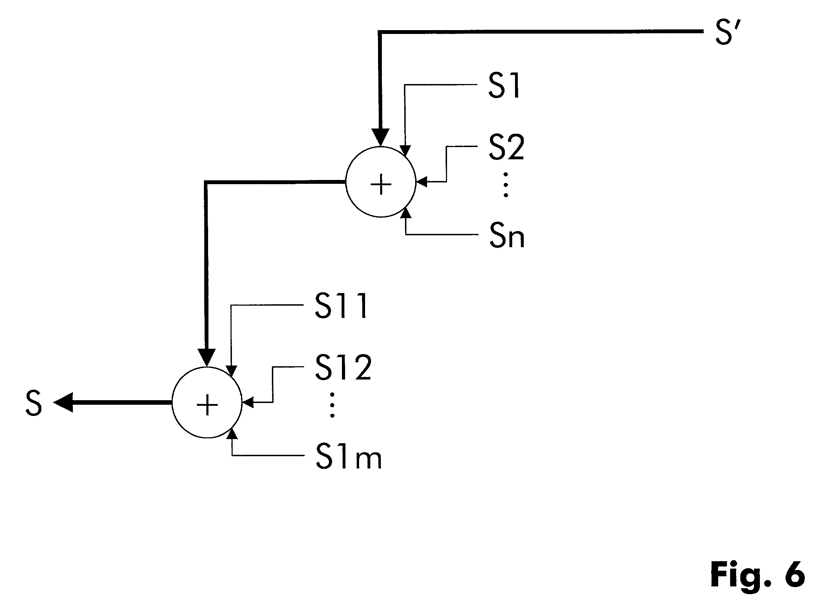

**Figure. 6** shows a cascaded aggregation of single data streams S1, S2 ..., Sn, S11, S12, ..., S1n into a complex data stream S. The cascading might require a synchronization and/or a coordinating of the indexing. The figure implements the function

$$S = \text{Aggregate}(\text{Aggregate}(S', (S1,1), (S2,2), ..., (Sn, n)),$$

$$(S1 , 11), S2,12), ..., (S1n, 1\ n))$$

The same technique could be applied for the separation operation.

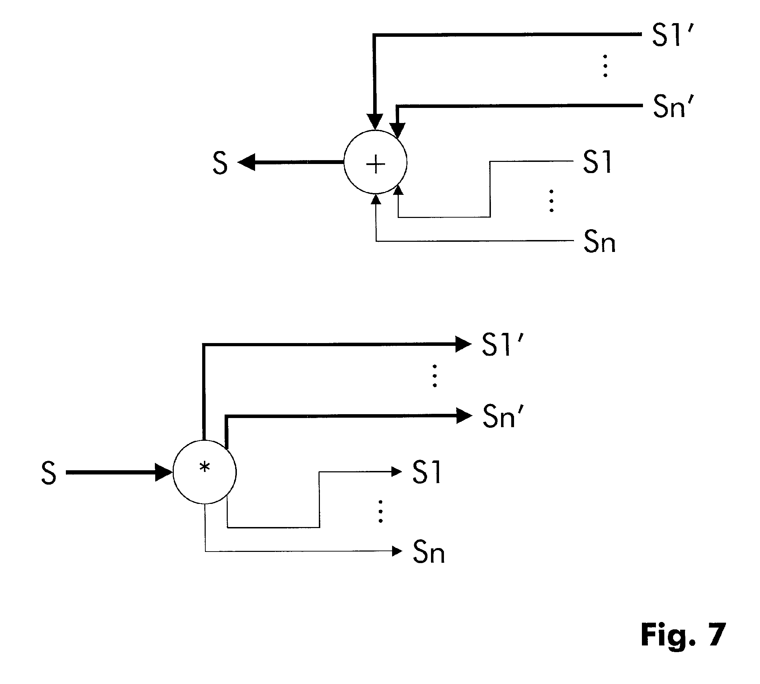

**Figure. 7** shows an aggregation operation + and separation operation * for multiple decomposable complex data streams S, S1', ..., Sn' and single data streams S1, ..., Sn. A first set of decomposable complex data streams S1', ..., Sn' and the single data streams S1, ..., Sn are aggregated into a resulting complex data stream S. Conversely, a complex data stream S is separated into a set of complex decomposable complex data streams S1'', ..., Sn' and the single data streams S1, ..., Sn. The connection between both associated functions is

$$S = \text{Aggregate}((S1', ..., Sn'), (S1, ..., Sn))$$

$$\text{Separate}(S, (1', ...., n'), (1, ..., n)) = [S1', ..., Sn', (S1,1), ..., (Sn, n)]$$

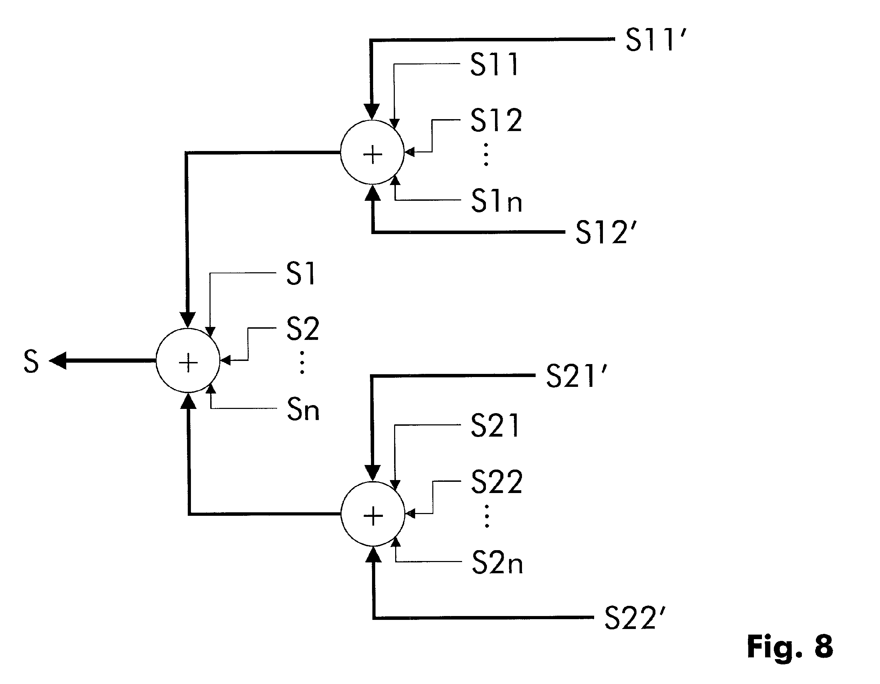

**Figure. 8** shows a tree-like cascaded aggregation of decomposable complex data streams S11', S12', S21', S22' and single data streams S1, S2, ..., Sn, S11, S12, ..., S1n, S21, ..., S2n into a complex data stream S. The cascading might require a synchronization and/or a coordinating of the indexing. The figure implements the function

$$S = \text{Aggregate}((\text{Aggregate}((S11', S12'), (S11, 11), (S12, 12), ..., (S1n, 1n)),$$

$$\text{Aggregate}((S21', S22'), (S21,21), (S22, 22), ..., (S2n, 2n))),$$

$$(S1,1), ..., (Sn, n))$$

The same technique could be applied for the separation operation.

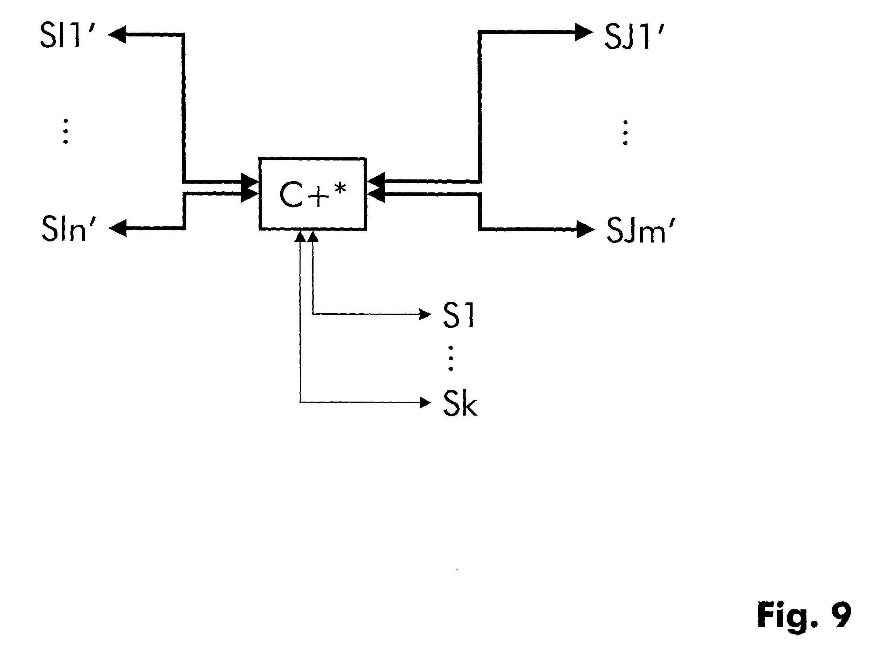

**Figure. 9** shows a cascaded aggregation and separation unit C+* capable of aggregating and separating from multiple data streams, namely the decomposable complex data streams SI1', ..., Sin', SJl', ..., SJm', and the single data streams S1, ..., Sn. The cascaded aggregation and separation unit C+* realizes, e.g. by applying iterative aggregations and separations, a macro capable of forwarding, aggregating, and separating decomposable complex data streams from left to right, i.e. from first decomposable complex data streams SI1', ..., Sln' to second decomposable complex data streams SJ1, ..., SJm and vice versa, and it is capable of aggregating and separating the single data streams S1, ..., Sn using indexing techniques, and/or a routing schema.

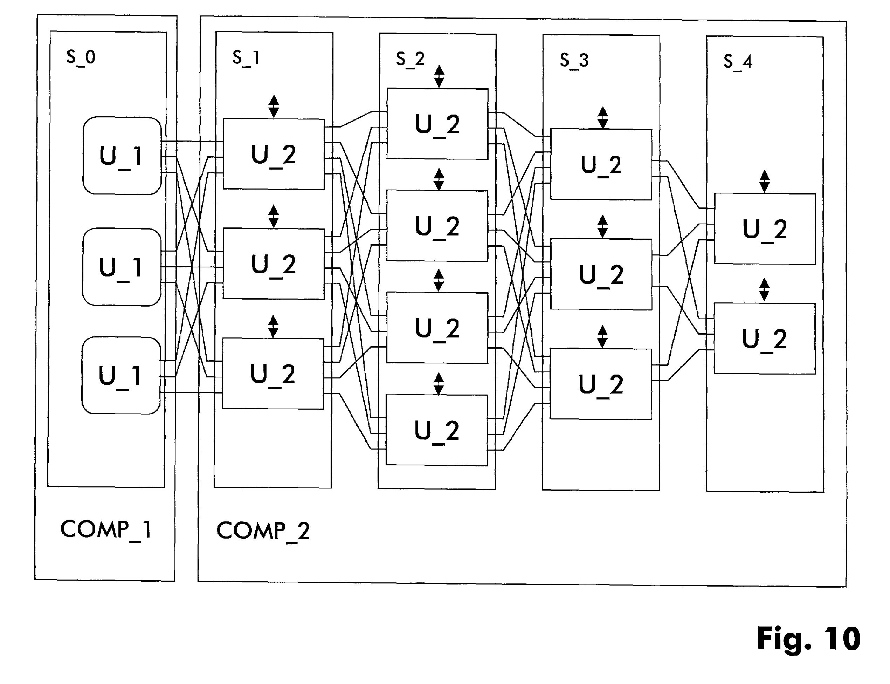

**Figure. 10** shows three units U_1 of a first component COMP_1 and twelve units U_2 of a second component COMP_2. The twelve units U_2 are organized into four stages, a first stage S_1, a second stage S_2, a third stage S_3 and a last stage S_4. The three units U_1 are organized in a set of three units S_0. C

Units U_2 of consecutive stages S1, S2, S3, S4 are meshed by means of a complete bipartite graph, i.e. a complete mesh. That means, for instance, that the four units the second stage S_2 are connected with the three units U_2 of the third stage S_3 are linked by 3*4=12 connections. Note that there are multiple sparse meshes of these two clusters comprising less connections.

Units U_2 of the first stage S_1 are connected with units U_1 of the first component also by means of a complete mesh. Hence forming an interface between the first component COMP_1 and the second component COMP_2.

The units U_2 of the second component COMP_2 are designed as aggregation and separation units C+* for aggregating and extracting data streams, and exchanging data streams via mesh connections.

Suppose the Interface has to transmit data streams from the second component COMP_2 to the first component COMP_1. Then the single data streams are aggregated by the units U_2 of the second component COMP_2 into complex data streams flowing according to a routing plan from right to left through the mesh connections between the stages S_4, S3, ..., S_1. Eventually the complex data streams arrive at the mesh connecting the both components COMP1 and COMP2 and are forwarded to the corresponding unit U_1 of the first component COMP_1.

If the Interface has to transmit data streams from the first component COMP_1 in the second component COMP_2, to be precise receive the data streams at the units U_2 of the first stage S_1, then the units U_2 of the second component COMP_2 separate single data streams and propagate remaining or resulting or even modified data streams from left to right according to the routing plan through the mesh connections between the stages S_1, S_2, S_3, and S_4 f the second component COMP_2 until the (complex) data streams are consumed.

**Figure. 11** illustrates the separation of encoding/decoding and transmitting/receiving in a realization of a prior art node B. A radio transmitter RT comprises several radio transmitter units RT_1, RT_2, RT_3. A baseband processor section BBPs comprises several baseband processors BB_1, BB_2, BB_3, ..., BB_n, where each of the baseband processors BB_1, BB_2, BB_3, ..., BB_n is connected with each radio transmitter units RT_1, RT_2, RT_3.

The decomposition requires the routing, aggregation, and separation functionality be located on the radio transmitter modules RT_1, RT_2, and RT_3; the baseband processors BB_1, BB_2, BB_3, ..., BB_n are rather primitive. The figure further shows that this solution does not scale very well since adding further baseband processors, requires adaptation of the interfaces (and the functionality) of the radio transmitter units RT_1, RT_2, RT_3 which is a great disadvantage.

**Figure. 12** shows a radio transmitter to baseband processor interface in a node B according to the invention. The baseband processors BBPs are distributed over baseband processor units BB_11, BB_12, BB_13, BB_21, BB_22, BB_23, BB_31, BB_32, BB_33, BB_41, BB_42, arranged into clusters CLU1, CLU2, CLU3 of three baseband processor units, and one last cluster CLU4 of two baseband processor units. The routing, aggregation, and separation processing could is located in the baseband processor units BB_11, BB_12, BB_13, BB_21, BB_22, BB_23, BB_31, BB_32, BB_33, BB_41, BB_42. The baseband processor units are arranged in a matrix such that each baseband processor unit has its own index, e.g. B_nm for the m-th baseband processor unit in the n-th cluster number, allowing a simplified routing schema. For redundancy, load balancing, and robustness reasons the clusters CLU1, ... CLU4 are connected stage-wise by complete meshes and the first cluster CLU1 is completely (self) interconnected.

The solution scales obviously well by adding additional clusters and/or filling the last cluster of the BBPs. Redundancy and degree of freedom concerning routing could be further improved by interconnecting baseband processor units within a cluster. The uniform size of the clusters is advantageous for manufacturing, e.g. for (plug-able) boards and regular back-planes.

Although the invention is illustrated exemplary on a node B system, a similar problem occurs in other network elements, e.g. a network access server or a DSLAM.

In a network access server the interface between the local telecommunication service provider and to a Internet backbone(s). And the server has to perform certain tasks, e.g. authenticates users requesting and routing the data stream between the user host and hosts elsewhere on the Internet. The components according to the invention might be telecommunication service provider sections handling tunneling or protocol conversions interfacing to multiple Internet sections.

In an digital subscriber line access multiplexer digital subscriber line (xDSL) traffic between a subscriber's end-user equipment, e.g. modems, or network interface cards and the network service provider, e.g. an ATM interface, is routed. The components according to the invention in this example might be modem sections, performing the multi tone modulation etc. interfacing to ATM processors, transmitting and receiving data streams between the DSLAM and the network service provider.

**Claims**

1. A network element of a telecommunication network comprising a first component (COMP_1) and a second component (COMP_2) and an interface between said first component (COMP_1) and said second component (COMP_2),

    - the first component (COMP_1) comprising a set of units of a first kind (U_1) for performing a first functionality,
    - the second component (COMP_2) comprising a set of units of a second kind (U_2) for performing a second functionality,
    - each units of a first kind (U_1) is connected with at least one unit of a second kind (U_2) of the second component (COMP_2),
    - and the units of a second kind (U_2) comprising adding means and dropping means for aggregating and extracting a sub data stream to/from said complex data streams,

   **characterized in that**

    - the set of units of a second kind (U_2) is arranged into multiple stages (S_1, S_2, S_3, S4),
    - the units of a second kind (U_2) are multistage-connected, such that each unit of a second kind (U_2) of a stage (S_2, S_3, S4) following a first stage (S_1) is connected with at least one other unit of a second kind (U_2) in any preceding stage,
    - the units of a second kind (U_2) further comprising routing means for restructuring and passing said complex data streams through said stages,
    - the units of a second kind (U_2) comprising further accessing and processing means for accessing and processing said sub data stream, thereby performing said second functionality, and input means and/or output means.

2. The network element of a telecommunication network according to claim 1, **characterized in that** the units of a second kind (U_2) in a stage (S_1, S_2, S_3, S4) are interconnected within the stage.

3. The network element of a telecommunication network according to claim 1, **characterized in that** all stages (S_1, S_2, S_3, S4) have the same number of units (U_2), except the last stage (S_4).

4. The network element of a telecommunication network according to claim 1, **characterized in that** the stages are interconnected by a complete mesh.

5. The network element of a telecommunication network according to claim 1, **characterized by** comprising further detection means for detecting defect units, such that the routing means having control means supporting fault tolerance by avoiding rout paths over said defect units.

6. The network element of a telecommunication network according to claim 1, **characterized in that** the network element is a node B, and the means for aggregating and extracting at least one data stream is realized by means of code division multiple access, the first component is a radio transmitter, and the second component is a baseband module.

7. A component within a network element of a telecommunication network

    - the first stage (S_1) providing a component interface,
    - and the units (U_2) comprising add means and drop means for aggregating and extracting sub data streams from said complex data streams,

   **characterized in that**

    - the component comprising multiple stages (S_1, S_2, S_3, S_4) of at least one unit (U_2) for performing a functionality,
    - the units are multistage-connected, such that each unit is connected with at least one other unit in any preceding stage,
    - and the units (U_2) comprising routing means for restructuring and passing said complex data streams through said stages,

- the unit (U_2) further comprising accessing and processing means for accessing and processing said at least one data stream, thereby performing the functionality and input means and/or output means.

8. The component within a network element of a telecommunication network according to claim 7, **characterized in that** all stages have the same number units, except the last stage.

9. The component within a network element of a telecommunication network according to claim 7, **characterized in that** the stages are interconnected by a complete mesh.

Fig. 1
Prior Art

GSM BSS 9

BSC 2

BTS1

Abis 10

A 11

Iu-PS, Iu-CS 15

RNC 4

RNC 3

Iur 14

Node B 7

Node B 6

Node B 5

Iub 13

Iub

Uu 12

UTRAN 8

Fig. 2

EP 1 448 002 A1

FDMA 40

TDMA 41

CDMA 42

Prior Art

Fig. 3

EP 1 448 002 A1

Fig. 4

EP 1 448 002 A1

**Fig. 5**

**Fig. 6**

Fig. 7

Fig. 8

Fig. 9

Fig. 10

**Prior Art**

**Fig. 11**

EP 1 448 002 A1

Fig. 12

<table>
<tr><td colspan="2"></td><td colspan="2"><strong>European Patent Office</strong></td><td colspan="2"><strong>EUROPEAN SEARCH REPORT</strong></td><td colspan="2">Application Number<br>EP 03 29 0366</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 754 597 A (LUREY DANIEL M ET AL) 19 May 1998 (1998-05-19) * the whole document * --- | 1-9 | H04Q7/30 |
| X | US 2002/141512 A1 (BLANKE GERO) 3 October 2002 (2002-10-03) * column 1, line 36 - line 57; figures 1,2 * * column 2, line 66 - column 5, line 15 * --- | 1-9 | |
| A | US 5 293 330 A (SAYEGH SOHEIL I) 8 March 1994 (1994-03-08) * abstract * --- | 5 | |
| A | GB 2 315 622 A (NIPPON ELECTRIC CO) 4 February 1998 (1998-02-04) * the whole document * --- | 1-9 | |
| A | US 4 931 802 A (MAHLE CHRISTOPH E ET AL) 5 June 1990 (1990-06-05) * the whole document * ----- | 1-9 | TECHNICAL FIELDS SEARCHED (Int.Cl.7) H04Q |

The present search report has been drawn up for all claims

| Place of search | Date of completion of the search | Examiner |
|---|---|---|
| BERLIN | 17 July 2003 | Quaranta, L |

EP 1 448 002 A1

## ANNEX TO THE EUROPEAN SEARCH REPORT
## ON EUROPEAN PATENT APPLICATION NO.

EP 03 29 0366

17-07-2003

| Patent document cited in search report | | Publication date | Patent family member(s) | | Publication date |
|---|---|---|---|---|---|
| US 5754597 | A | 19-05-1998 | US | 5579341 A | 26-11-1996 |
| | | | EP | 0885510 A1 | 23-12-1998 |
| | | | JP | 2000509567 T | 25-07-2000 |
| | | | WO | 9735412 A1 | 25-09-1997 |
| | | | AU | 686046 B2 | 29-01-1998 |
| | | | AU | 4610696 A | 24-07-1996 |
| | | | AU | 678124 B2 | 15-05-1997 |
| | | | AU | 5294796 A | 24-07-1996 |
| | | | BR | 9506911 A | 16-09-1997 |
| | | | BR | 9510374 A | 02-06-1998 |
| | | | CA | 2182382 C | 05-06-2001 |
| | | | CA | 2206311 A1 | 11-07-1996 |
| | | | CN | 1142293 A ,B | 05-02-1997 |
| | | | CN | 1172566 A | 04-02-1998 |
| | | | DE | 19581527 C2 | 01-08-2002 |
| | | | DE | 19581527 T0 | 07-05-1997 |
| | | | DE | 19581876 T0 | 27-11-1997 |
| | | | EP | 0800737 A1 | 15-10-1997 |
| | | | FI | 963346 A | 27-08-1996 |
| | | | FI | 972748 A | 25-06-1997 |
| | | | FR | 2729026 A1 | 05-07-1996 |
| | | | FR | 2738428 A1 | 07-03-1997 |
| | | | FR | 2738429 A1 | 07-03-1997 |
| | | | GB | 2301990 A ,B | 18-12-1996 |
| | | | GB | 2311916 A ,B | 08-10-1997 |
| | | | IL | 115823 A | 06-12-1998 |
| | | | JP | 10512114 T | 17-11-1998 |
| | | | JP | 10502513 T | 03-03-1998 |
| | | | KR | 199316 B1 | 15-06-1999 |
| | | | PL | 316636 A1 | 03-02-1997 |
| | | | SE | 9603102 A | 29-10-1996 |
| | | | SE | 9702156 A | 29-08-1997 |
| | | | TR | 960822 A1 | 21-10-1996 |
| | | | US | 5912927 A | 15-06-1999 |
| | | | WO | 9621305 A1 | 11-07-1996 |
| | | | WO | 9621288 A1 | 11-07-1996 |
| | | | US | 5602874 A | 11-02-1997 |
| | | | US | 5748683 A | 05-05-1998 |
| | | | US | 6167099 A | 26-12-2000 |
| | | | US | 5818883 A | 06-10-1998 |
| | | | US | 5812605 A | 22-09-1998 |
| | | | US | 5854813 A | 29-12-1998 |
| US 2002141512 | A1 | 03-10-2002 | DE | 10115610 A1 | 02-10-2002 |
| | | | CN | 1379605 A | 13-11-2002 |
| | | | EP | 1246484 A2 | 02-10-2002 |

22

**ANNEX TO THE EUROPEAN SEARCH REPORT
ON EUROPEAN PATENT APPLICATION NO.**

EP 03 29 0366

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2003

| Patent document cited in search report | | Publication date | Patent family member(s) | | Publication date |
|---|---|---|---|---|---|
| US 2002141512 | A1 | | JP | 2002319920 A | 31-10-2002 |
| US 5293330 | A | 08-03-1994 | NONE | | |
| GB 2315622 | A | 04-02-1998 | JP | 10041857 A | 13-02-1998 |
| | | | BR | 9702642 A | 30-06-1998 |
| | | | CN | 1175872 A ,B | 11-03-1998 |
| | | | KR | 255892 B1 | 01-05-2000 |
| US 4931802 | A | 05-06-1990 | US | 5220320 A | 15-06-1993 |

EPO FORM P0459

For more details about this annex : see Official Journal of the European Patent Office, No. 12/82